# EUROPÄISCHE PATENTSCHRIFT

(11) **EP 2 009 281 B1**
(45) Veröffentlichungstag und Bekanntmachung des Hinweises auf die Patenterteilung: **14.11.2012**
(21) Anmeldenummer: 08005546.0
(22) Anmeldetag: 25.03.2008
(51) Int. Cl.: F03D 7/04, F03D 7/02

(54) **Verfahren zum Einlaufen einer Triebstrangkomponente einer Windenergieanlage und Windenergieanlage zur Ausführung dieses Verfahrens**
Method for running in a wind energy power train component and wind energy device for carrying out this method
Procédé d'introduction d'un composant de train d'entraînement d'une éolienne et éolienne destinée à l'exécution de ce procédé

(30) Priorität: 30.06.2007 DE 102007030501
(43) Veröffentlichungstag der Anmeldung: 31.12.2008
(73) Patentinhaber: Nordex Energy GmbH, 22848 Norderstedt (DE)
(72) Erfinder: Harms, Ulrich, 22399 Hamburg (DE); Nitzpon, Joachim, 20255 Hamburg (DE); Karstens, Hauke, 22765 Hamburg (DE)
(74) Vertreter: Hauck Patent- und Rechtsanwälte

(56) Entgegenhaltungen:
- FR-A- 716 452
- FR-A- 1 065 354
- US-A- 3 161 181
- D. Kwik: "Engine break-in"[Online] 21. April 2010 (2010-04-21), Seiten 1-3, XP002589710 Wikipedia, the free encyclopedia Gefunden im Internet: URL:http://en.wikipedia.org/w/index.php?ol did=357380652> [gefunden am 2010-06-30]

## Beschreibung

Die Erfindung betrifft ein Verfahren zum Einlaufen einer Triebstrangkomponente einer Windenergieanlage und eine Windenergieanlage, die das Verfahren ausführen kann.

Der Triebstrang einer Windenergieanlage überträgt das Drehmoment eines vom Wind angetriebenen Rotors der Windenergieanlage auf einen Generator, der elektrische Energie zur Verfügung stellt. Im Falle eines direkt angetriebenen Generators kann dieser über eine Welle unmittelbar mit dem Rotor verbunden sein. Bei der am häufigsten anzutreffenden Bauweise wird der Generator jedoch mit einer wesentlich höheren Drehzahl als der Rotor betrieben, so daß ein Untersetzungsgetriebe im Triebstrang erforderlich ist. Derartige Getriebe sind in der Regel zwei- oder dreistufig ausgeführt und weisen eine Anzahl von ineinandergreifenden Verzahnungen auf. Sämtliche Komponenten eines derartigen Triebstrangs sind hohen mechanischen Belastungen ausgesetzt, insbesondere die Verzahnungen des Getriebes werden durch die hohen Drehmomente des Rotors stark belastet. Infolgedessen kommt es trotz intensiver Bemühungen der Windenergieanlagen- bzw. Getriebehersteller immer wieder zu Schäden im Triebstrangbereich, die zu einem Ausfall der Windenergieanlage führen können. Die hohen Belastungen führen auch zu einer begrenzten Lebensdauer einzelner Triebstrangskomponenten, die unter Umständen einen Austausch der Komponenten erfordern. Ein solcher Austausch ist mit einem hohen Kosten- und Zeitaufwand verbunden und führt zu einem unerwünschten Ausfall der Windenergieanlage.

Davon ausgehend ist es die Aufgabe der Erfindung, ein Verfahren anzugeben, das einen besonders schonenden Betrieb einer Triebstrangkomponente einer Windenergieanlage ermöglicht und eine lange Lebensdauer der Triebstrangkomponerite fördert, sowie eine Windenergieanlage, die das Verfahren ausführen kann.

Diese Aufgabe wird gelöst durch das Verfahren mit den Merkmalen des Anspruchs 1. Vorteilhafte Ausgestaltungen sind in den sich anschließenden Unteransprüchen angegeben.

Das erfindungsgemäße Verfahren dient zum Einlaufen einer Triebstrangkomponente einer Windenergieanlage, wobei die Windenergieanlage eine Betriebsführung aufweist, die mindestens eine für die Belastung der Triebstrangkomponente maßgebliche Betriebsgröße B auf einen Sollwert B_{Soll} regeln kann, wobei nach Inbetriebnahme der Windenergieanlage der Sollwert B_{Soll} durch einen Maximalwert B_{Max} begrenzt wird, der in Abhängigkeit von einem Ertragswert W vorgegeben wird, der einen seit Inbetriebnahme der Triebstrangkomponente erzielten Ertrag der Windenergieanlage beschreibt.

Beim Einlaufen einer Triebstrangkomponente wird innerhalb eines gewissen Zeitraums nach der Inbetriebnahme der Triebstrangkomponente diese unter besonderen Randbedingungen betrieben, beispielsweise mit einer reduzierten oder besonders gleichmäßigen Belastung.

Die Erfindung beruht auf der Erkenntnis, daß die erreichbare Lebensdauer einer Triebstrangkomponente insbesondere durch eine schonende Inbetriebnahme neuer Triebstrangkomponenten verlängert werden kann. Daher wird ein gezieltes Einlaufen der Triebstrangkomponente vorgeschlagen, bei dem es sich sowohl um ein Einlaufen einer gänzlich neuen Windenergieanlage als auch um ein Einlaufen einer Triebstrangkomponente handeln kann, die beispielsweise als Ersatzteil in eine bestehende Windenergieanlage eingebaut worden ist. Bei der Triebstrangkomponente kann es sich beispielsweise um ein Getriebe, eine Getriebestufe, ein einzelnes Zahnrad oder ein Lager handeln.

Bei der für die Belastung der Triebstrangkomponente maßgeblichen Betriebsgröße B der Windenergieanlage kann es sich um eine beliebige Betriebsgröße handeln, die einen wesentlichen Einfluß auf die Belastung der Triebstrangkomponente hat.

Der Sollwert B_{Soll}, auf den die Betriebsführung der Windenergieanlage die für die Belastung der Triebstrangkomponente maßgebliche Betriebsgröße B regelt, kann beispielsweise von der Betriebsführung selbst auf Grundlage der vorherrschenden Windgeschwindigkeit oder extern, beispielsweise durch eine Windparksteuerung, vorgegeben werden.

Während des Einlaufens der Triebstrangkomponente erhält der Sollwert B_{Soll} eine Obergrenze durch einen Maximalwert B_{Max}. Die Vorgabe des Maximalwerts B_{Max} erfolgt in Abhängigkeit von einem Ertragswert W. Der Ertragswert W ist eine Rechengröße, die einen seit Inbetriebnahme der Triebstrangkomponente erzielten Ertrag der Windenergieanlage beschreibt. Sie kann dem tatsächlich seit Inbetriebnahme der Triebstrangkomponente von der Windenergieanlage erzielten Ertrag im Sinne einer elektrischen Energie, gemessen in Kilowattstunden, entsprechen, oder in komplizierterer Weise aus diesem erzielten Ertrag oder mit diesem Ertrag verknüpften Größen wie beispielsweise den dem Ertrag zugrunde liegenden Meßgrößen hervorgehen. Die Abhängigkeit des Maximalwerts B_{Max} von dem Ertragswert W kann durch einen funktionalen Zusammenhang in der Windenergieanlage, bevorzugt in deren Betriebsführung, hinterlegt sein oder in Form einer Wertetabelle, die jedem Ertragswert W einen Maximalwert B_{Max} zuordnet.

Dieses Vorgehen führt zu einer Begrenzung der mechanischen Belastung der Triebstrangkomponente, die von der seit Inbetriebnahme der Triebstrangkomponente akkumulierten Belastung abhängig ist. Die auf die Triebstrangkomponente tatsächlich einwirkenden Belastungen werden dadurch so begrenzt, daß eine besonders gute Anpassung miteinander in Eingriff stehender Flächen, beispielsweise der Reibpaarungen in den Lagern und auf den Zahnflanken, und ein besonders schonendes, kontinuierliches Einlaufen erreicht wird. Das erfindungsgemäße Verfahren ist insbesondere vorteilhaft, um Verzahnungen zu glätten und deren Tragfähigkeit zu gewährleisten. Eine Überlastung der Zahnflanken bei Inbetriebnahme wird wirksam verhindert. Dadurch verlängert sich die erreichbare Lebensdauer der Triebstrangkomponente.

In einer Ausgestaltung ist die für die Belastung der Triebstrangkomponente maßgebliche Betriebsgröße B die von der Windenergieanlage erzeugte elektrische Leistung. Die von der Windenergieanlage erzeugte elektrische Leistung hat einen unmittelbaren Einfluß auf die Belastung der Triebstrangkomponente. Bei der elektrischen Leistung kann es sich z.B. um eine Wirkleistung, eine Blindleistung oder eine Scheinleistung handeln. Die Regelung auf den Sollwert B_{Soll} durch die Betriebsführung kann im Falle der Regelung der elektrischen Leistung in bekannter Weise durch Vorgabe eines Generatormoments oder eine entsprechende Blattwinkelverstellung erfolgen.

In einer Ausgestaltung ist die für die Belastung der Triebsstrangkomponente maßgebliche Betriebsgröße B ein Drehmoment im Triebstrang der Windenergieanlage. Das vom Triebstrang übertragene Drehmoment ist eine Betriebsgröße, die einen unmittelbaren Einfluß auf die Belastung der Triebstrangkomponente hat. Das Drehmoment kann an einer beliebigen Komponente des Triebstrangs ermittelt oder gemessen werden. Bevorzugt erfolgt eine Messung des Drehmoments an der Abtriebswelle des Getriebes. Das dort auftretende Drehmoment kann insbesondere durch Vorgabe eines Generatormoments geregelt werden.

In einer Ausgestaltung wird der Maximalwert B_{Max} nach Inbetriebnahme stetig erhöht, bis er bei einem bestimmten Ertragswert W₂ einen Nennwert B_{Nenn} der für die Belastung der Triebstrangkomponente maßgeblichen Betriebsgröße B der Windenergieanlage erreicht. Dadurch wird auch die auf die Triebstrangkomponente maximal einwirkende Belastung kontinuierlich erhöht, was zu einem besonders wirksamen Einlaufen führt. In einer weiteren Ausgestaltung wird der Einlaufvorgang der Triebstrangkomponente bei Erreichen eines bestimmten Ertragswerts abgeschlossen und es findet keine weitere Begrenzung durch den Maximalwert B_{Max} mehr statt. Der bestimmte Ertragswert kann W₂ sein. Die Windenergieanlage befindet sich anschließend im Normalbetrieb.

In einer weiteren Ausgestaltung weist der Maximalwert B_{Max} bei Inbetriebnahme der Triebstrangkomponente einen Anfangswert B_{Frei} auf. Somit erfolgt keine Begrenzung des Sollwerts B_{Soll} auf Werte unterhalb des durch den Anfangswert B_{Frei} vorgegebenen Minimalwerts. Eine diesem Anfangswert B_{Frei} entsprechende Mindestbelastung der Triebstrangkomponente ist folglich ab Inbetriebnahme der Triebstrangkomponente zugelassen. Dadurch wird eine übermäßige Begrenzung der Betriebsgröße vermieden.

Gemäß einer weiteren Ausgestaltung wird der Maximalwert B_{Max} nach Inbetriebnahme der Triebstrangkomponente bis zu einem vorgebbaren Ertragswert W₁ konstant gehalten. In einem Zeitraum bis zum Erreichen des Ertragswerts W₁ wird somit keine Erhöhung der Belastungsobergrenze vorgenommen. Dadurch wird sichergestellt, daß die Belastung der Triebstrangkomponente erst nach einer gewissen, für das erste Einlaufen erforderlichen Belastungsdauer und -höhe gesteigert wird.

In einer weiteren Ausgestaltung wird der Maximalwert B_{Max} in einem Abschnitt proportional zu dem Ertragswert W vorgegeben. Es erfolgt somit eine lineare Steigerung des Maximalwerts B_{Max} in Abhängigkeit von dem Ertragswert W. Dies entspricht einer gleichmäßigen, kontinuierlichen Rücknahme der Belastungsbegrenzung mit ansteigendem Ertragswert W. Es wird eine gleichmäßige Steigerung der zulässigen Belastung der Triebstrangkomponente erreicht.

In einer weiteren Ausgestaltung wird der Maximalwert B_{Max} in einem Abschnitt proportional zu einer Wurzel aus dem Ertragswert W vorgegeben. Bevorzugt handelt es sich bei der Wurzelfunktion um die Quadratwurzel, es kann jedoch auch eine andere Wurzelfunktion gewählt werden. Dieser Ausgestaltung liegt die Überlegung zugrunde, daß die auftretenden Belastungen der Triebstrangkomponente von dem momentanen Wert der Betriebsgröße B abhängig sind, insbesondere von der Leistung der Windenergieanlage, wobei bei einer bestimmten Leistung vorwiegend bestimmte Flächenabschnitte der Triebstrangkomponente belastet werden. Gleichzeitig fließt die Leistung linear in den erzielten Ertrag ein, d.h. bei großer Leistung wird ein bestimmtes Ertragsintervall in kürzerer Zeit durchlaufen als bei kleiner Leistung. Wird die Leistungsbegrenzung während des Einlaufens proportional zu einer Wurzel aus dem Ertragswert W zurückgeführt, wird jedes Belastungsniveau für eine annähernd gleich lange Zeitdauer aufrechterhalten. Es wird daher ein besonders gleichmäßiges Einlaufen aller Flächenabschnitte der Triebstrangkomponente erreicht.

Gemäß einer weiteren Ausgestaltung wird der Maximalwert B_{Max} zwischen den Ertragswerten W₁ und W₂ proportional zu dem Ertragswert W vorgegeben. Der Abschnitt der gleichmäßigen Belastungsbegrenzungsrücknahme füllt somit den gesamten Zeitraum zwischen den beiden Ertragswerten W₁ und W₂ aus.

In einer weiteren Ausgestaltung wird der Ertragswert W durch Kumulation der erzielten Erträge der Windenergieanlage seit Inbetriebnahme der Triebstrangkomponente bestimmt. Die in einem Zeitintervall erzielten Erträge können dabei durch Multiplikation der mittleren in dem Zeitintervall erzeugten elektrischen Leistung P mit der Zeitdauer des Intervalls berechnet werden. Diese Erträge werden aufsummiert, um den Ertragswert W zu einem bestimmten Zeitpunkt vorzugeben. Dadurch wird erreicht, daß der Ertragswert W zu jedem Zeitpunkt die Belastungsdauer und -höhe der Triebstrangkomponente seit Inbetriebnahme widerspiegelt.

Gemäß einer weiteren Ausgestaltung werden bei der Kumulation der erzielten Erträge nur diejenigen Erträge berücksichtigt, die bei einem momentanen oder mittleren Wert der für die Belastung der Triebstrangkomponente maßgeblichen Betriebsgröße B oberhalb eines Minimalwerts B_{Rlv} erzielt worden sind. Der Minimalwert B_{Rlv} definiert eine untere Schranke der Betriebsgröße B, die zu einer einlaufrelevanten Belastung der Triebstrangkomponente führt. Wird die Windenergieanlage bei sehr geringen Belastungen unterhalb des Minimalwerts betrieben, führt dies zu keiner Belastung der Triebstrangkomponente, die zu einem wirksamen Einlaufen führen könnte. Diese Betriebszeiten bleiben daher unberücksichtigt.

In weiteren Ausgestaltungen wird der Minimalwert B_{Rlv} in Abhängigkeit vom Maximalwert B_{Max} oder proportional zum Maximalwert B_{Max} vorgegeben. In diesen Fällen erfolgt eine Anpassung der Bewertung einer bestimmten Belastung als einlaufrelevant an die bereits von der Windenergieanlage seit Inbetriebnahme der Triebstrangkomponente erzielten Erträge. Es wird dadurch eine besonders gut an den erreichten Einlaufzustand der Triebstrangkomponente angepaßte Belastung für das weitere Einlaufen erreicht.

Die obige Aufgabe wird ebenfalls gelöst durch die Windenergieanlage mit den Merkmalen des Anspruchs 15. Vorteilhafte Ausgestaltungen sind in den sich anschließenden Unteransprüchen angegeben.

Die erfindungsgemäße Windenergieanlage hat
- mindestens eine Triebstrangkomponente,
- eine Betriebsführung, die mindestens eine für die Belastung der Triebstrangkomponente maßgebliche Betriebsgröße B auf einen Sollwert B_{Soll} regeln kann,
- wobei die Betriebsführung eine Einrichtung zur Bestimmung eines Ertragswerts W, der einen seit Inbetriebnahme der Triebstrangkomponente erzielten Ertrag der Windenergieanlage beschreibt, und
- eine Einrichtung zur Vorgabe eines Maximalwerts B_{Max} in Abhängigkeit von einem Ertragswert W aufweist,
- wobei die Betriebsführung den Maximalwert B_{Max} zur Begrenzung des Sollwerts B_{Soll} verwenden kann.

Die erfindungsgemäße Windenergieanlage ist insbesondere zur Ausführung des erfindungsgemäßen Verfahrens geeignet.

Bei der Einrichtung zur Bestimmung des Ertragswerts W und bei der Einrichtung zur Vorgabe des Maximalwerts B_{Max} kann es sich insbesondere um geeignete Programme oder Programmbestandteile handeln, die zum Betrieb der Windenergieanlage auf einem Steuerrechner ausgeführt werden.

Die Erfindung wird nachfolgend anhand eines in einer Figur dargestellten Ausführungsbeispiels des Verfahrens näher erläutert. In dem Ausführungsbeispiel ist die für die Belastung der Triebstrangkomponente maßgebliche Betriebsgröße B die von der Windenergieanlage bereitgestellte elektrische Leistung, die im folgenden wie üblich mit P bezeichnet wird.

Die einzige Figur zeigt ein Diagramm zur Abhängigkeit des Maximalwerts P_{Max} der Leistung von dem Ertragswerts W.

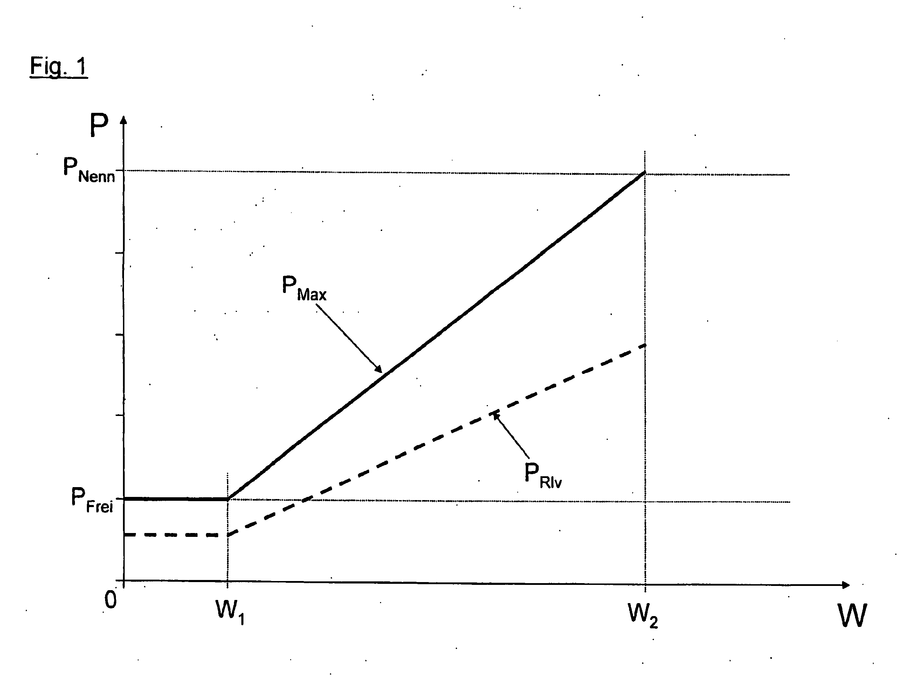

Auf der Abszisse des in Fig. 1 gezeigten Koordinatensystems ist der Ertragswert W aufgetragen. Auf der Ordinate des Koordinatensystems ist die von der Windenergieanlage bereitgestellte elektrische Leistung P verzeichnet. Jedem Ertragswert W ist aufgrund des in dem Diagramm dargestellten Zusammenhangs ein Maximalwert der Leistung P_{Max} zugeordnet, der zur Begrenzung des Sollwerts P_{Soll} der Leistung verwendet wird. Weiterhin ist jedem Ertragswert W ein Minimalwert P_{Rlv} der Leistung zugeordnet, der eine Untergrenze für eine als einlaufrelevant zu klassifizierende Leistung darstellt.

Die Kurve für den Maximalwert P_{Max} beginnt bei einem Ertragswert W von 0 bei einem Anfangswert P_{Frei}, der im Beispiel etwa 1/5 der ebenfalls eingezeichneten Nennleistung P_{Nenn} der Windenergieanlage beträgt. Unabhängig von dem bereits erzielten Ertrag seit Inbetriebnahme der Triebstrangkomponente wird der Sollwert der Leistung P_{Soll} nicht auf Werte unterhalb dieser stets freigegebenen Leistung P_{Frei} begrenzt. Der Maximalwert P_{Max} wird bis zum Erreichen eines ersten Ertragswert W₁ konstant auf dem Wert P_{Frei} gehalten. Oberhalb des Ertragswerts W₁ erfolgt ein Anstieg des Maximalwerts P_{Max} proportional zum Ertrag W, bis der Maximalwert P_{Max} bei dem zweiten Ertragswert W₂ den Nennwert P_{Nenn} der Leistung der Windenergieanlage erreicht. Zu diesem Zeitpunkt ist das Einlaufen der Triebstrangkomponente abgeschlossen und es erfolgt keine weitere Begrenzung der elektrischen Leistung durch den Maximalwert P_{Max}.

Die den Minimalwert P_{Rlv} der als einlaufrelevant zu bewertenden Leistung angebende Kurve weist Werte auf, die proportional zum Maximalwert P_{Max} sind. Im dargestellten Beispiel beträgt der Minimalwert P_{Rlv} stets ungefähr 60 Prozent des Maximalwerts P_{Max}.

Die in dem Diagramm dargestellten Ertragswerte W werden während des Einlaufens wie folgt berechnet. Es erfolgt eine kontinuierliche Messung der von der Windenergieanlage bereitgestellten elektrischen Leistung P. In aufeinanderfolgenden Zeitintervallen von 30 Sekunden Dauer wird ein Mittelwert der bereitgestellten elektrischen Leistung P gebildet. Alternativ kann auch ein gleitender (kontinuierlicher) Mittelwert aus den jeweils in den letzten 30 Sekunden gemessenen Leistungswerten gebildet werden. Liegt dieser Mittelwert oberhalb des Minimalwerts P_{Rlv}, der dem bis zu diesem Zeitpunkt erreichten Ertragswert W zugeordnet ist, wird die in diesem Zeitintervall erzeugte Leistung als einlaufrelevant klassifiziert. Der Mittelwert der Leistung wird mit dem Intervall multipliziert, um den einlaufrelevanten Ertrag in diesem Zeitintervall zu bestimmen. Der so bestimmte Ertrag wird zu dem bis zu diesem Zeitpunkt erreichten Ertragswert hinzuaddiert. Auf diese Weise wird der Ertragswert W ermittelt, der nur die als einlaufrelevant bewerteten Erträge der erzeugten elektrischen Leistung berücksichtigt, die tatsächlich eine einlaufrelevante Belastung der Triebstrangkomponente bewirkt haben.

## Patentansprüche

1. Verfahren zum Einlaufen einer Triebstrangkomponente einer Windenergieanlage, wobei die Windenergieanlage eine Betriebsführung aufweist, die mindestens eine für die Belastung der Triebstrangkomponente maßgebliche Betriebsgröße B auf einen Sollwert B_{Soll} regeln kann, wobei nach Inbetriebnahme der Triebstrangkomponente der Sollwert B_{Soll} durch einen Maximalwert B_{Max} begrenzt wird, der in Abhängigkeit von einem Ertragswert W vorgegeben wird, der den seit Inbetriebnahme der Triebstrangkomponente erzielten Ertrag der Windenenergieanlage beschreibt.

2. Verfahren nach Anspruch 1, **dadurch gekennzeichnet, daß** eine der für die Belastung der Triebstrangkomponente maßgeblichen Betriebsgrößen B die von der Windenergieanlage erzeugte elektrische Leistung ist.

3. Verfahren nach Anspruch 1 oder 2, **dadurch gekennzeichnet, daß** eine der für die Belastung der Triebstrangkomponente maßgeblichen Betriebsgrößen B ein Drehmoment im Triebstrang der Windenergieanlage ist.

4. Verfahren nach einem der Ansprüche 1 bis 3, **dadurch gekennzeichnet, daß** der Maximalwert B_{Max} nach Inbetriebnahme stetig erhöht wird, bis er bei einem bestimmten Ertragswert W₂ einen Nennwert B_{Nenn} der für die Belastung der Triebstrangkomponente maßgeblichen Betriebsgröße B der Windenergieanlage erreicht.

5. Verfahren nach einem der Ansprüche 1 bis 4, **dadurch gekennzeichnet, daß** das Einlaufen beim Erreichen eines bestimmten Ertragswerts beendet wird.

6. Verfahren nach einem der Ansprüche 1 bis 5, **dadurch gekennzeichnet, daß** der Maximalwert B_{Max} bei Inbetriebnahme der Triebstrangkomponente einen Anfangswert B_{Frei} aufweist.

7. Verfahren nach einem der Ansprüche 1 bis 6, **dadurch gekennzeichnet, daß** der Maximalwert B_{Max} nach Inbetriebnahme der Triebstrangkomponente bis zu einem vorgebbaren Ertragswert W₁ konstant gehalten wird.

8. Verfahren nach einem der Ansprüche 1 bis 7, **dadurch gekennzeichnet, daß** der Maximalwert B_{Max} in einem Abschnitt proportional zu dem Ertragswert W vorgegeben wird.

9. Verfahren nach einem der Ansprüche 1 bis 7, **dadurch gekennzeichnet, daß** der Maximalwert B_{Max} in einem Abschnitt proportional zu einer Wurzel aus dem Ertragswert W vorgegeben wird.

10. Verfahren nach Anspruch 8 oder 9, **dadurch gekennzeichnet, daß** der Maximalwert B_{Max} zwischen den Ertragswerten W₁ und W₂ proportional zu dem Ertragswert W bzw. proportional zur Quadratwurzel aus dem Ertragswert W vorgegeben wird.

11. Verfahren nach einem der Ansprüche 1 bis 10, **dadurch gekennzeichnet, daß** der Ertragswert W durch Kumulation der erzielten Erträge der Windenergieanlage seit Inbetriebnahme der Triebstrangkomponente bestimmt wird.

12. Verfahren nach Anspruch 11, **dadurch gekennzeichnet, daß** bei der Kumulation der erzielten Erträge nur diejenigen Erträge berücksichtigt werden, die bei einem momentanen oder mittleren Wert der für die Belastung der Triebstrangkomponente maßgeblichen Betriebsgröße B oberhalb eines Minimalwerts B_{Rlv} erzielt worden sind.

13. Verfahren nach Anspruch 12, **dadurch gekennzeichnet, daß** der Minimalwert B_{Rlv} in Abhängigkeit vom Maximalwert B_{Max} vorgegeben wird.

14. Verfahren nach Anspruch 13, **dadurch gekennzeichnet, daß** der Minimalwert B_{Rlv} proportional zum-Maximalwert B_{Max} vorgegeben wird.

15. Windenergieanlage mit
- mindestens einer Triebstrangkomponente,
- einer Betriebsführung, die mindestens eine für die Belastung der Triebstrangkomponente maßgebliche Betriebsgröße B der Windenergieanlage auf einen Sollwert B_{Soll} regelt,
- wobei die Betriebsführung eine Einrichtung zur Bestimmung eines Ertragswerts W, der einen seit Inbetriebnahme der Triebstrangkomponente erzielten Ertrag der Windenergieanlage beschreibt, und
- eine Einrichtung zur Vorgabe eines Maximalwerts B_{Max} in Abhängigkeit von einem Ertragswert W aufweist,
- wobei die Betriebsführung während des Einlaufens der Triebstrang Komponente den Maximalwert B_{Max} zur Begrenzung des Sollwerts B_{Soll} verwendet.

16. Windenergieanlage nach Anspruch 15, **dadurch gekennzeichnet, daß** eine der für die Belastung der Triebstrangkomponente maßgeblichen Betriebsgrößen B der Windenergieanlage die von der Windenergieanlage erzeugte elektrische Leistung ist.

17. Windenergieanlage nach Anspruch 1.5 oder 16, **dadurch gekennzeichnet, daß** eine der für die Belastung der Triebstrangkomponente maßgeblichen Betriebsgrößen B der Windenergieanlage ein Drehmoment im Triebstrang der Windenergieanlage ist.

18. Windenergieanlage nach einem der Ansprüche 15 bis 17, **dadurch gekennzeichnet, daß** die Einrichtung zur Vorgabe eines Maximalwerts B_{Max} den Maximalwert B_{Max} nach Inbetriebnahme stetig erhöhen kann, bis er bei einem bestimmten Ertragswert W₂ einen Nennwert B_{Nenn} der für die Belastung der Triebstrangkomponente maßgeblichen Betriebsgröße B der Windenergieanlage erreicht.

19. Windenergieanlage nach einem der Ansprüche 15 bis 18, **dadurch gekennzeichnet, daß** die Betriebsführung die Begrenzung des Sollwerts B_{Soll} beenden kann, wenn die Einrichtung zur Bestimmung eines Ertragswerts W einen Ertragswerts W in einer bestimmten Höhe ermittelt halt.

20. Windenergieanlage nach einem der Ansprüche 15 bis 19, **dadurch gekennzeichnet, daß** eine Einrichtung zur Vorgabe eines Anfangswerts B_{Frei} vorhanden ist und die Einrichtung zur Vorgabe des Maximalwerts B_{Max} den vorgegebenen Anfangswert B_{Frei} zur Vorgabe des Maximalwerts B_{Max} zum Zeitpunkt der Inbetriebnahme der Triebstrangkomponente verwenden kann.

21. Windenergieanlage nach einem der Ansprüche 15 bis 20, **dadurch gekennzeichnet, daß** die Einrichtung zur Vorgabe eines Maximalwerts B_{Max} den Maximalwert B_{Max} nach Inbetriebnahme der Triebstrangkomponente bis zu einem vorgebbaren Ertragswert W₁ konstant halten kann.

22. Windenergieanlage nach einem der Ansprüche 15 bis 21, **dadurch gekennzeichnet, daß** die Einrichtung zur Vorgabe eines Maximalwerts B_{Max} den Maximalwert B_{Max} in einem Abschnitt proportional zum Ertragswert W vorgeben kann.

23. Windenergieardage nach einem der Ansprüche 15 bis 21, **dadurch gekennzeichnet, daß** die Einrichtung zur Vorgabe eines Maximalwerts B_{Max} den Maximalwert B_{Max} in einem Abschnitt proportional zu einer Wurzel aus dem Ertragswert W vorgeben kann.

24. Windenergieanlage nach Anspruch 22 oder 23, **dadurch gekennzeichnet, daß** die Einrichtung zur Vorgabe eines Maximalwerts B_{Max} den Maximalwert B_{Max} zwischen den Ertragswerten W₁ und W₂ proportional zu dem Ertragswert W bzw. proportional zur Quadratwurzel aus dem Ertragswert W vorgeben kann.

25. Windenergieanlage nach einem der Ansprüche 15 bis 24, **dadurch gekennzeichnet, daß** die Einrichtung zur Bestimmung eines Ertragswerts W den Ertragswert W durch Kumulation der erzielten Erträge der Windenergieanlage seit Inbetriebnahme der Triebstrangkomponente bestimmen kann.

26. Windenergieanlage nach Anspruch 25, **dadurch gekennzeichnet, daß** die Einrichtung zur Bestimmung eines Ertragswerts W bei der Kumulation der erzielten Erträge gezielt nur diejenigen Erträge berücksichtigen kann, die bei einem momentanen oder mittleren Wert der für die Belastung der Triebstrangkomponente maßgeblichen Betriebsgröße B oberhalb eines Minimalwerts B_{Rlv} erzielt worden sind.

27. Windenergieanlage nach Anspruch 26, **dadurch gekennzeichnet, daß** eine Einrichtung zur Vorgabe des Minimalwerts B_{Rlv} vorhanden ist, die den Minimalwert B_{Rlv} in Abhängigkeit vom Maximalwert B_{Max} vorgeben kann.

28. Windenergieanlage nach Anspruch 27, **dadurch gekennzeichnet, daß** die Einrichtung zur Vorgabe des Minimalwerts B_{Rlv} den Minimalwert B_{Rlv} proportional zum Maximalwert B_{Max} vorgeben kann.

## Claims

1. A method for running-in a drive train component of a wind turbine, wherein the wind turbine has an operating control, which can control at least one parameter B decisive for the load on the drive train component to a set point B_{Soll}, wherein after commissioning of the drive train component the set point B_{Soll} is limited to a maximum value B_{Max}, which is preset in dependency on a value of yield W, which describes the yield of the wind turbine produced since the commissioning of the drive train component.

2. The method according to claim 1, **characterized in that** one of the parameters B decisive for the load on the drive train component is the electrical power generated by the turbine.

3. The method according to claim 1 or 2, **characterized in that** one of the parameters B decisive for the load on the drive train component is a torque in the drive train of the wind turbine.

4. The method according to one of claims 1 through 3, **characterized in that** the maximum value B_{Max} is constantly increased after commissioning until it reaches a nominal value B_{Nenn} of the parameter B of the wind turbine device decisive for the load on the drive component at a certain value of yield W₂.

5. The method according to one of claims 1 through 4, **characterized in that** the running-in is ended once a certain value of yield is reached.

6. The method according to one of claims 1 through 5, **characterized in that** the maximum value B_{Max} has an initial value B_{Frei} upon commissioning of the drive train component.

7. The method according to one of claims 1 through 6, **characterized in that** the maximum value B_{Max} is held constant upon commissioning of the drive train component until a presetable value of yield W₁.

8. The method according to one of claims 1 through 7, **characterized in that** the maximum value B_{Max} in a section is preset proportional to the value of yield W.

9. The method according to one of claims 1 through 7, **characterized in that** the maximum value B_{Max} in a section is preset proportional to a root of the value of yield W.

10. The method according to claim 8 or 9, **characterized in that** the maximum value B_{Max} between the values of yield W₁ and W₂ are preset proportional to the value of yield W or respectively proportionally to the square root of the value of yield W.

11. The method according to one of claims 1 through 10, **characterized in that** the value of yield W is determined through cumulation of the produced yields of the wind turbine since commissioning of the drive train component.

12. The method according to claim 11, **characterized in that** upon cumulation of the produced yields only those yields are taken into consideration that were produced in the case of a momentary or average value of the parameter B decisive for the load on the drive train component above a minimum value B_{Rlv},

13. The method according to claim 12, **characterized in that** the minimum value B_{Rlv} is preset in dependency on the maximum value B_{Max}.

14. The method according to claim 13, **characterized in that** the minimum value B_{Rlv} is preset proportional to the maximum value B_{Max}.

15. A wind turbine having
- at least one drive train component,
- an operating control, which controls at least one parameter B of the wind turbine decisive for the load on the drive train component to a set point B_{Soll},
- wherein the operating control has a device for determining a value of yield W, which describes a yield of the wind turbine produced since commissioning of the drive train component, and
- a device for presetting a maximum value B_{Max} in dependency on a value of yield W,
- wherein the operating control uses the maximum value B_{Max} for limiting the set point B_{Soll} during running-in of the drive train component.

16. The wind turbine according to claim 15, **characterized in that** one of the parameters B of the wind energy turbine decisive for the load on the drive train component is the electrical power generated by the turbine.

17. The wind turbine according to claim 15 or 16, **characterized in that** one of the parameters B of the wind turbine decisive for the load on the drive train component is a torque in the drive train of the wind turbine.

18. The wind energy device according to one of claims 15 through 17, **characterized in that** the device for presetting a maximum value B_{Max} can constantly increase the maximum value B_{Max} after commissioning until it reaches a nominal value B_{Nenn} of the parameter B of the wind turbine decisive for the load on the drive train component at a certain value of yield W₂.

19. The wind turbine according to one of claims 15 through 18, **characterized in that** the operating control can end the limiting of the set point B_{Soll} when the device for determining a value of yield W has determined a value of yield W at a certain height.

20. The wind turbine device according to one of claims 15 through 19, **characterized in that** a device for presetting an initial value B_{Frei} is present and the device for presetting the maximum value B_{Max} can use the preset initial value B_{Frei} for presetting the maximum value B_{Max} at the time of the commissioning of the drive train component.

21. The wind turbine according to one of claims 15 through 20, **characterized in that** the device for presetting a maximum value B_{Max} can hold constant the maximum value B_{Max} after commissioning of the drive train component up to a presetable value of yield W₁.

22. The wind turbine according to one of claims 15 through 21, **characterized in that** the device for presetting a maximum value B_{Max} can preset the maximum value B_{Max} in a section proportional to the value of yield W.

23. The wind turbine according to one of claims 15 through 21, **characterized in that** the device for presetting a maximum value B_{Max} can preset the maximum value B_{Max} in a section proportional to a root of the value of yield W.

24. The wind turbine according to one of claims 22 through 23, **characterized in that** the device for presetting a maximum value B_{Max} can preset the maximum value B_{Max} between the values of yield W₁ and W₂ proportional to the value of yield W or respectively proportional to the square root of the value of yield W.

25. The wind turbine according to one of claims 15 through 24, **characterized in that** the device for determining a value of yield W can determine the value of yield W through cumulation of the produced yields of the wind turbine since commissioning of the drive train component.

26. The wind turbine according to claim 25, **characterized in that** the device for determining a value of yield W upon cumulation of the produced yields can only take into consideration those yields that were produced in the case of a momentary or average value of the parameter B decisive for the load on the drive train component above a minimum value B_{Rlv}.

27. The wind turbine according to claim 26, **characterized in that** a device for presetting the minimum value B_{Rlv} is present, which can preset the minimum value B_{Rlv} in dependency on the maximum value B_{Max}.

28. The wind turbine according to claim 27, **characterized in that** the device for presetting the minimum value B_{Rlv} can preset the minimum value B_{Rlv}, proportional to the maximum value B_{Max}.

## Revendications

1. Procédé d'èmarrage d'un composant de chaîne cinématique d'une éolienne, dans lequel l'éolienne comporte une commande d'exploitation qui peut régler au moins une grandeur d' exploitation B déterminante pour la charge du composant de chaîne cinématique sur une valeur de consigne B_{Soll}, dans lequel la valeur de consigne B_{Soll} est limitée par une valeur maximale B_{Max} après la mise en service du composant de chaîne cinématique, qui est attribue en fonction d'une valeur de rendement W, qui décrit le rendement de l'éolienne obtenu depuis la mise en service du composant de chaîne cinématique,

2. Procédé selon la revendication 1, **caractérisé en ce qu'**une des grandeurs d' exploitation B déterminantes pour la charge du composant de chaîne cinématique est la puissance électrique produite par l'éolienne.

3. Procédé selon la revendication 1 ou 2, **caractérisé en ce qu'**une des grandeurs d# exploitation B déterminantes pour la charge du composant de chaîne cinématique est un couple de rotation dans le chaîne cinématiquede l'éolienne.

4. Procédé selon l'une quelconque des revendications 1 à 3, **caractérisé en ce que** la valeur maximale B_{Max} est augmentée en continu après la mise en service jusqu'à ce qu'elle atteigne, pour une valeur de rendement déterminée W₂, une valeur nominale B_{Nenn} de la grandeur d' exploitation B déterminante pour la charge du composant de chaîne cinématiquede l'éolienne.

5. Procédé selon l'une quelconque des revendications 1 à 4, **caractérisé en ce que** l'introduction est terminée lors de l'atteinte d'une valeur de rendement déterminée.

6. Procédé selon l'une quelconque des revendications 1 à 5, **caractérisé en ce que** la valeur maximale B_{Max} présente une valeur de départ B_{Frei} lors de la mise en service du composant de chaîne cinématique.

7. Procédé selon l'une quelconque des revendications 1 à 6, **caractérisé en ce que** la valeur maximale B_{Max} est maintenue constante après la mise en service du composant de chaîne cinématique jusqu'à une valeur de rendement W₁ pouvant être attribue.

8. Procédé selon l'une quelconque des revendications 1 à 7, **caractérisé en ce que** la valeur maximale B_{Max} dans une section est attribue de manière proportionnelle à la valeur de rendement W.

9. Procédé selon l'une quelconque des revendications 1 à 7, **caractérisé en ce que** la valeur maximale B_{Max} dans une section est attribue de manière proportionnelle à une racine de la valeur de rendement W.

10. Procédé selon la revendication 8 ou 9, **caractérisé en ce que** la valeur maximale B_{Max} est attribue entre les valeurs de rendement W₁ et W₂ de manière proportionnelle à la valeur de rendement W ou proportionnelle à la racine carrée de la valeur de rendement W.

11. Procédé selon l'une quelconque des revendications 1 à 10, **caractérisé en ce que** la valeur de rendement W est déterminée par la cumulation des rendements obtenus de l'éolienne depuis la mise en service du composant de chaîne cinématique.

12. Procédé selon la revendication 11, **caractérisé en ce que**, lors de la cumulation des rendements obtenus, seuls les rendements qui ont été obtenus pour une valeur instantanée ou moyenne de la grandeur d' exploitation B déterminante pour la charge du composant de chaîne cinématique au-dessus d'une valeur minimale B_{Rlv}, sont pris en compte.

13. Procédé selon la revendication 12, **caractérisé en ce que** la valeur minimale B_{Rlv} est attribue en fonction de la valeur maximale B_{Max}.

14. Procédé selon la revendication 13, **caractérisé en ce que** la valeur minimale B_{Rlv} est attribue de manière proportionnelle à la valeur maximale B_{Max}.

15. Éolienne comprenant
- au moins un composant de chaîne cinématique,
- une commande d'exploitation qui régle au moins une grand'expoitation de service B déterminante pour la charge du composant de chaîne cinématique de l'éolienne sur une valeur de consigne B_{Soll},
- dans laquelle la commande d'exploitation comporte un dispositif pour la détermination d'une valeur de rendement W qui décrit un rendement de l'éolienne obtenu depuis la mise en service du composant de chaîne cinématique, et
- un dispositif pour la attributation d'une valeur maximale B_{Max} en fonction d'une valeur de rendement W,
- dans laquelle lors de démarrage du composant de chaîne cinématique la commande d'exploitation utilise la valeur maximale B_{Max} pour limiter la valeur de consigne B_{Soll}.

16. Eolienne selon la revendication 15, **caractérisée en ce qu'**une des grandeurs d' exploitation B déterminantes pour la charge du composant de chaîne cinématique de l'éolienne est la puissance électrique produite par l'éolienne.

17. Eolienne selon la revendication 15 ou 16, **caractérisée en ce qu'**une des grandeurs d' exploitation B déterminantes pour la charge du composant de chaîne cinématique de l'éolienne est un couple de rotation dans le chaîne cinématique de l'éolienne.

18. Eolienne selon l'une quelconque des revendications 15 à 17, **caractérisée en ce que** le dispositif pour la définition préalable d'une valeur maximale B_{Max} peut augmenter en continu la valeur maximale B_{Max} après la mise en service jusqu'à ce qu'elle atteigne, pour une valeur de rendement déterminée W₂, une valeur nominale B_{Nenn} de la grandeur d' exploitation B déterminante pour la charge du composant de chaîne cinématiquede l'éolienne.

19. Eolienne selon l'une quelconque des revendications 15 à 18, **caractérisée en ce que** la commande d'exploitation peut terminer la limitation de la valeur de consigne B_{Soll} lorsque le dispositif pour la détermination d'une valeur de rendement W a déterminé une valeur de rendement W d'une hauteur déterminée.

20. Eolienne selon l'une quelconque des revendications 15 à 19, **caractérisée en ce qu'**un dispositif pour la attributation d'une valeur de départ B_{Frei} est présent et le dispositif pour la attributation d'une valeur maximale B_{Max} peut utiliser la valeur de départ prédéfinie B_{Frei} pour la attributation de la valeur maximale B_{Max} au moment de la mise en service du composant de chaîne cinématique.

21. Eolienne selon l'une quelconque des revendications 15 à 20, **caractérisée en ce que** le dispositif pour la attributation d'une valeur maximale B_{Max} peut maintenir constante la valeur maximale B_{Max} après la mise en service du composant de chaîne cinématique jusqu'à une valeur de rendement W₁ pouvant être attribue.

22. Eolienne selon l'une quelconque des revendications 15 à 21, **caractérisée en ce que** le dispositif pour la attributation d'une valeur maximale B_{Max} peut prédéfinir la valeur maximale B_{Max} dans une section de manière proportionnelle à la valeur de rendement W.

23. Eolienne selon l'une quelconque des revendications 15 à 21, **caractérisée en ce que** le dispositif pour la attributation d'une valeur maximale B_{Max} peut prédéfinir la valeur maximale B_{Max} dans une section de manière proportionnelle à une racine de la valeur de rendement W.

24. Eolienne selon la revendication 22 ou 23, **caractérisée en ce que** le dispositif pour la attributation d'une valeur maximale B_{Max} peut attribuer la valeur maximale B_{Max} entre les valeurs de rendement W₁ et W₂ de manière proportionnelle à la valeur de rendement W ou proportionnelle à la racine carrée de la valeur de rendement W.

25. Eolienne selon l'une quelconque des revendications 15 à 24, **caractérisée en ce que** le dispositif pour la détermination d'une valeur de rendement W peut déterminer la valeur de rendement W par la cumulation des rendements obtenus de l'éolienne depuis la mise en service du composant de chaîne cinématique.

26. Eolienne selon la revendication 25, **caractérisée en ce que** le dispositif pour la détermination d'une valeur de rendement W peut prendre en compte de manière ciblée, lors de la cumulation des rendements obtenus, seuls les rendements qui ont été obtenus pour une valeur instantanée ou moyenne de la grandeur d' exploitation B déterminante pour la charge du composant de chaîne cinématique au-dessus d'une valeur minimale B_{Rlv}.

27. Eolienne selon la revendication 26, **caractérisée en ce qu'**un dispositif pour la attributation de la valeur minimale B_{Rlv}, est présent, lequel peut attribuer la valeur minimale B_{Rlv} en fonction de la valeur maximale B_{Max}.

28. Eolienne selon la revendication 27, **caractérisée en ce que** le dispositif pour la attributation de la valeur minimale B_{Rlv} peut attribuer la valeur minimale B_{Rlv} de manière proportionnelle à la valeur maximale B_{Max}.
